# EUROPÄISCHE PATENTSCHRIFT

(11) **EP 2 106 436 B1**
(45) Veröffentlichungstag und Bekanntmachung des Hinweises auf die Patenterteilung: **17.09.2014**
(21) Anmeldenummer: 07866263.2
(22) Anmeldetag: 23.12.2007
(51) Int. Cl.: C11B 3/00, C10G 31/09, C11B 1/06, C11B 3/04, C10G 3/00

(54) **VERFAHREN ZUR HERSTELLUNG EINES KRAFTSTOFFS AUS PFLANZENÖL**
METHOD FOR THE PRODUCTION OF A FUEL FROM VEGETABLE OIL
PROCÉDÉ DE PRODUCTION D'UN CARBURANT À PARTIR D'UNE HUILE VÉGÉTALE

(30) Priorität: 27.12.2006 DE 102006061604
(43) Veröffentlichungstag der Anmeldung: 07.10.2009
(73) Patentinhaber: Waldland-Vermarktungsgesellschaft mbH, 3533 Friedersbach (AT); Gruber, Georg, 91161 Hilpoltstein (DE); Kaiser, Thomas, 85095 Denkendorf (DE); Dotzer, Alois, 90584 Allersberg (DE)
(72) Erfinder: GRUBER, Georg, 91161 Hilpoltstein (DE); KAISER, Thomas, 85095 Denkendorf (DE); DOTZER, Alois, 90584 Allersberg (DE)
(74) Vertreter: Oberhardt, Knut
(86) Internationale Anmeldenummer: PCT/EP2007/011419
(87) Internationale Veröffentlichungsnummer: WO 2008/080600

(56) Entgegenhaltungen:
- EP-A- 0 376 406
- EP-A- 0 507 217
- EP-A- 1 741 767
- WO-A-02/20705
- GB-A- 1 491 170

## Beschreibung

Die Erfindung betrifft ein Verfahren zur Herstellung eines Kraftstoffs aus Pflanzenöl nach dem Oberbegriff von Anspruch 1.

Aus der WO-A-0220705 ist ein Verfahren zur Herstellung von Pflanzenöl bekannt geworden, bei dem die Ölfrüchte gepresst werden und das ablaufende Öl zur Säuberung in einen Filter am Boden eines Tanks gepumpt wird. Aus der EP-A-1 741 767 ist weiterhin zu entnehmen, dass solche Pflanzenöle zur Herstellung eines Kraftstoffes für den Betrieb von dieselmotorischen Brennkraftmaschinen verwendet werden können.

Insbesondere im LKW-Bereich, aber auch bei PKWs gibt es zwischenzeitlich dieselmotorische Brennkraftmaschinen, die mit reinem Pflanzenöl betrieben werden können. Dabei werden marktübliche Serienmotoren auf Pflanzenölbetrieb umgerüstet. Die so umgerüsteten Motoren werden entweder mit kaltgepressten Pflanzenölen aus dezentralen Ölmühlen oder mit sogenanntem Vollraffinat, das aus überregionalen Extraktionsbetrieben stammt, betrieben.

Zur Herstellung von kaltgepresstem Pflanzenöl hat sich inzwischen in Deutschland ein Netz von ca. 500 dezentralen Ölmühlen gebildet. Diese Ölmühlen verarbeiten ca. 10 % der nationalen Rapsproduktion. Das von diesen Ölmühlen hergestellte Pflanzenöl weist üblicherweise einen Phosphorgehalt zwischen 5 und 30 ppm, also auf Gewichtsanteile bezogen zwischen 5 und 30 mg/kg Pflanzenöl auf. Der Gehalt an Magnesium und Calcium beträgt typischerweise in Summe zwischen 10 und 30 ppm.

Bei dem oben angeführten Vollraffinat handelt es sich um Pflanzenöl, das typischerweise mit Hilfe von Hexan aus den gemahlenen Früchten extrahiert wird. Das bei der Extraktion entstehende Zwischenprodukt wird gefiltert, entschleimt und gebleicht. Das Endprodukt weist einen Phosphorgehalt unter 5 ppm auf. Gute Vollraffinate besitzen einen Phosphorgehalt zwischen 1 und 3 ppm und einen Calcium-Magnesium-Summenwert ebenfalls zwischen 1 und 3 ppm. Da das sogenannte Volllraffinat meist im Lebensmittelbereich eingesetzt wird, bestehen bezüglich der Höchstwerte von Phosphor, Calcium und Magnesium jedoch keinerlei Vorschriften.

Untersuchungen zur Spezifizierung des Phosphor-, Calcium- und Magnesiumgehalts von Pflanzenöl als Kraftstoff haben zwischenzeitlich zu einer Vornorm des Deutschen Instituts für Normierung geführt. Diese DIN-Vornorm DINV 51605 beziffert den Höchstgehalt dieser drei Stoffe in einem aus Pflanzenöl gewonnenen Treibstoff folgendermaßen:
- Phosphor: 12 ppm
- Calcium + Magnesium: 20 ppm.

Bei dem Betrieb von Motoren mit Kraftstoff nach dieser Vornorm hat sich herausgestellt, dass oftmals unerklärliche Verkrustungen entstehen, die die Kolben belegen, sich auf den Ventiltellern oder der Glühkerze ablagern, oder im Abgasbereich den Katalysator blockieren oder den Rußfilter verstopfen. Unter welchen genauen Betriebsbedingungen diese Ablagerungen entstehen, konnte bisher jedoch nicht endgültig geklärt werden.

Die gleichen Phänomene treten ebenso bei Motoren auf, die mit Rapsmethylester, sogenanntem Biodiesel, betrieben werden. Biodiesel wird nach der DIN-Norm DIN EN14214 produziert. Nach dieser Norm sind folgende Höchstwerte für Phosphor, Calcium und Magnesium vorgeschrieben:
- Phosphor: 10 mg/kg
- Calcium + Magnesium: 5 mg/kg

Soweit von den überregionalen Extraktionsbetrieben Vollraffinat nicht nur für den Lebensmittelbereich, sondern auch als Kraftstoff hergestellt wird, nähert man sich immer mehr an die höheren Phosphor-, Calcium- und Magnesiumwerte nach der DIN-Vornorm für Pflanzenöl als Kraftstoff an. Das bedeutet, dass bei einer Verwendung des Vollraffinats als Kraftstoff der Gehalt an Phosphor, Calcium und Magnesium gegenüber einer Verwendung im Lebensmittelbereich steigt. Dies führt auch zu einem Kostenvorteil, wenn für die Kraftstoffproduktion die Extraktionsrate erhöht oder der Reinigungsaufwand verringert wird.

Es wurde jedoch festgestellt, dass ein aus Pflanzenöl hergestellter Kraftstoff, der Phos-phor-, Calcium- und Magnesiumwerte weit unterhalb dieser Vornorm aufweist, nicht die beschriebenen Verkrustungen hervorruft.

In der Veröffentlichung der Fachagentur nachwachsende Rohstoffe e. V. (FNR) vom August 2006 mit dem Titel "Pflanzenöl als Kraftstoff" wird auf Seite 31, linke Spalte, auf das Prinzip der kuchenbildenden Filtration eingegangen. Dieses Prinzip, bei dem das Öl solange im Kreislauf gepumpt wird, bis der Filterkuchen seine filternde Wirkung erreicht hat, wird üblicherweise in Ölmühlen verwendet, um das von der Presse ablaufende Öl von seinen Trubstoffen zu befreien.

Die Reduzierung von Phosphor erfolgt in großen zentralen Ölmühlen unter anderem bei der Entschleimung. Eine entsprechende Prozessstufe ist dem Handbuch der Lebensmitteltechnologie, M. Bockisch, Suttgart 1993, Kapitel 5.2.5.2 und 5.2.5.3, auf Seite 344 beschrieben. Ein weiterer nachgeschalteter Prozess bei der Raffination von bereits gefiltertem Pflanzenöl ist das so genannte Bleichen. Hier wird dem bereits gesäuberten Pflanzenöl Bleicherde zugesetzt, um unerwünschte Farb- und Geruchsstoffe zu binden. Diese Bleicherde bindet aber auch Phosphor, Calcium und Magnesium. Um die Bleicherde wieder zu entfernen, wird eine weitere kuchenbildende Filtration dem Bleichen nachgeschaltet. Dieser Prozess ist in Kapitel 7.3, Seite 508 des o. g. Handbuchs der Lebensmitteltechnologie beschrieben.

Da solche nachgeschalteten Raffinations-Prozesse für dezentrale Ölmühlen zu hohe Investitions und Betriebskosten verursachen, werden sie nur in großen zentralen Ölmühlen durchgeführt.

Der Erfindung liegt deshalb die Aufgabe zugrunde, ein Verfahren zur Herstellung eines Kraftstoffs aus Pflanzenöl so auszugestalten, dass auch dezentrale Ölmühlen bei der Her-stellung von kalt gepresstem Pflanzenöl dazu in der Lage sind, den Gehalt an Phosphor, Calcium und Magnesium zu reduzieren.

Gelöst wird die Aufgabe gemäß der Erfindung durch ein Verfahren zur Herstellung eines Kraftstoffs aus Pflanzenöl mit den Merkmalen von Anspruch 1. Durch das Versetzen des Pflanzenöls mit Tonmineral in einem ersten Schritt noch vor der Filterung sind noch alle Trubstoffe von der Pressung in dem Öl enthalten. Bei der Filterung setzen sich diese Trubstoffe auf dem Filter ab und sind so für die eigentliche Filterwirkung verantwortlich. Um hier einen Filterkuchen entsprechender Stärke zu erreichen, wird das zu filternde Pflanzenöl so lange im Kreislauf durch die Filter gepumpt, bis der Filterkuchen auf dem Filter die gewünschte Filterwirkung zeigt. Erst dann beginnt der eigentliche Filtriervorgang, nach dem das gefilterte Pflanzenöl als Kraftstoff verwendet werden kann.

Es hat sich nun gezeigt, dass das beigemischte Tonmineral die größte Wirkung zeigt, wenn es in den Filterkuchen eingebunden ist. Das Pflanzenöl wird so bei der Filterung mit hohem Druck an den gleichmäßig verteilten Tonmineral-Partikeln vorbei gedrückt. Hierbei kann das Tonmineral mit seiner gesamten Oberfläche wirken.

Durch die überraschend intensive Entfernung von Phosphat, Calcium und Magnesium kann mit höherem Druck gepresst werden. Bei höherem Pressdruck steigt normalerweise der Gehalt an Phosphor, Calcium und Magnesium. Selbstverständlich erhöht sich aber auch der Ertrag an gepresstem Pflanzenöl. Durch die Entfernung dieser Stoffe nach dem erfindungsgemäßen Verfahren kann folglich die Qualität des Kraftstoffs verbessert und gleichzeitig ein höherer Ertrag erzielt werden. Dadurch lassen sich die geringen Mehrkosten durch den Einsatz des Tonminerals fast ausgleichen.

Die gleichmäßige Verteilung des Tonminerals im Filterkuchen lässt sich am Besten dadurch erreichen, dass das aus der Presse ablaufende Pflanzenöl zusammen mit den Trubstoffen und dem zugesetzten Tonmineral eine vorbestimmte Zeit gerührt wird. Hierbei wird das Tonmineral gleichmäßig mit den Trubstoffen im Pflanzenöl vermischt und kann sich bei der Filterung dann zusammen mit den Trubstoffen gleichmäßig auf der Filterfläche absetzen.

Abhängig von der Sorte des gepressten Pflanzenöls hat sich herausgestellt, dass eine Rührzeit zwischen 20 und 60 min die besten Ergebnisse bringt. Das bedeutet, dass von dem ablaufenden Pflanzenöl in einem Mischbehälter eine Verweilzeit von wenigstens 20 min eingehalten werden sollte. Eine Verweilzeit von mehr als 60 min verbessert das Ergebnis dagegen nicht mehr, sondern führt nur zu einer längeren Durchlaufzeit und ver-schlechtert somit die Wirtschaftlichkeit des erfindungsgemäßen Verfahrens.

Bei den für die Verwendung als Kraftstoff gängigen Sorten hat sich ergeben, dass sowohl in qualitativer als auch in wirtschaftlicher Hinsicht ein Optimum erreicht wird, wenn das ablaufende Pflanzenöl nach dem Versetzen mit Tonmineral und vor der Filterung zwischen 30 und 50 min gerührt wird.

Da Pflanzenöl bei niedrigen Temperaturen immer dickflüssiger wird, sollte bei der Vermischung eine Temperatur von wenigstens 20°C vorherrschen. Oberhalb dieser Temperatur verstärkt sich auch die Wirkung des Tonminerals, so dass nur kleinere Mengen notwendig sind.

Bei Rapsöl wird das Gemisch aus ablaufendem Pflanzenöl und Tonmineral vor der Filterung auf einer Temperatur zwischen 35 und 42°C gehalten. In diesem Temperaturbereich wird die beste Wirkung des Tonminerals erreicht und es kann gleichzeitig ausgeschlossen werden, dass das Pflanzenöl durch zu hohe Temperaturen geschädigt wird.

Als Tonmineral können unter anderem synthetisches Silicagel oder amorphe Kieselsäure eingesetzt werden. In besonders vorteilhafter Weise enthält das Tonmineral jedoch Bentonit. Bentonit enthält als wichtigsten Bestandteil Montmorillonit und besitzt eine sehr große innere Oberfläche. Zuweilen ist von 400-600 m² pro Gramm die Rede. Es ist daher bestens als Adsorptionsmittel geeignet. Montmorillonite besitzen zudem ein hohes Ionentauschvermögen, da sie die Kationen zwischen den Schichten ihrer Dreischicht-Struktur hervorragend gegen Kationen aus den zu behandelnden Lösungen austauschen können.

Eine noch größere innere Oberfläche erhält das Bentonit, wenn es mit Säure aktiviert wird. Dabei wird die innere Oberfläche wenigstens verdoppelt.

Der Verbrauch von Tonmineral liegt - je nach Qualität des gepressten Pflanzenöls - bei 0,25-10,00 Gewichtsprozent. Die Qualität des Pflanzenöls hängt vom Anbau der Ölpflanzen (Klima, Boden, Düngung) und von der Pressung ab. Der Qualitätsbegriff ist in diesem Fall auf den Gehalt von Phosphor, Calcium und Magnesium bezogen. Es spielt jedoch ebenso der Anteil an Trubstoffen im ablaufenden Pflanzenöl eine Rolle.

Bei einer Pressung von Rapssaat mit den üblichen Parametern ist normalerweise eine Zugabe von 1-3 Gewichtsprozent Tonmineral ausreichend. Der Qualitätsgewinn bei einer höheren Zudosierung würde in keinem vernünftigen Verhältnis zu den damit verbundenen Kosten stehen.

Vorteilhaft werden dem von der Presse ablaufenden Pflanzenöl noch Zellulose haltige Zusatzstoffe beigesetzt, die insbesondere die Filterwirkung verbessern. Hier kommen z. B. Sägespäne zur Anwendung.

Es werden jedoch auch noch andere so genannte Filterhilfsstoffe verwendet. Als Beispiel sollen hier Kieselgur oder Kieselgur haltige Zusatzstoffe erwähnt werden.

Es hat sich herausgestellt, dass Pflanzenöl nach dem erfindungsgemäßen Verfahren mit Erfolg behandelt werden kann, wenn es einen Trubstoffanteil zwischen 2 und 30 Gewichtsprozent aufweist. Bei einem geringeren Trubstoffanteil ist eine innige Vermischung der Trubstoffe mit dem zugegebenen Tonmineral nicht mehr gewährleistet. Der Aufbau des Filterkuchens wird demzufolge auch ungleichmäßig. Die Wirkung des Tonminerals zur Entfernung von Phosphor, Calcium und Magnesium aus dem Pflanzenöl wird daher stark reduziert. Bei einem Anteil von über 30 Gewichtsprozent müsste die Zugabe von Tonmineral enorm erhöht werden, um im Filterkuchen eine wirksame prozentuale Verteilung zu erreichen.

Die besten Ergebnisse werden erzielt, wenn die Presse so eingestellt wird, dass der Trubstoffanteil in dem ablaufenden Pflanzenöl zwischen 3 und 5 Gewichtsprozent beträgt. In diesem Fall lässt sich bereits bei einer sehr geringen Zugabe von Tonmineral ein ausgezeichnetes Ergebnis erzielen.

In vorteilhafter Weise wird die Menge des zugesetzten Tonminerals von dem Trubstoffanteil abhängig gemacht. Es ist davon auszugehen, dass das Tonmineral hauptsächlich seine Wirkung im Filterkuchen und nur begrenzt im gerührten Öl entfaltet. Maßgeblich ist daher der Aufbau des Filterkuchens. Da folglich bei einem hohen Trubstoffanteil der Filterkuchen sehr schnell aufgebaut wird, muss auch eine große Menge Tonmineral zugemischt werden, um die entsprechende Zusammensetzung des Filterkuchens zu erreichen.

Weitere Einzelheiten und Vorteile der Erfindung ergeben sich aus den Unteransprüchen im Zusammenhang mit der Beschreibung eines Ausführungsbeispiels, das anhand der Zeichnung eingehend erläutert wird.

Es zeigt:

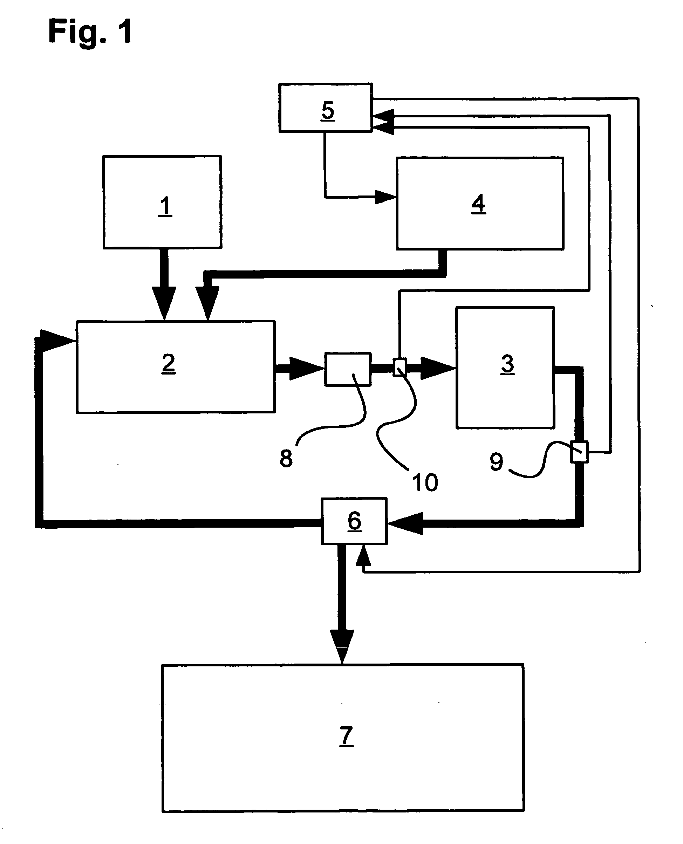

- Fig. 1: ein Blockdiagramm eines erfindungsgemäßen Verfahrens.

Die Presse 1 ist üblicherweise als Spindelpresse ausgeführt. Dabei dreht eine Spindel innerhalb eines Käfigs, der aus parallel zur Spindelachse verlaufenden Seierstäben gebildet wird. Die Ölfrüchte brauchen normalerweise vorher nicht vermahlen zu werden, da sie in der Spindelpresse so weit gebrochen werden, dass das Öl abgepresst werden kann.

Die exakte Justierung des Abstands der einzelnen Seierstäbe ist für den Anteil an Trubstoffen in dem ablaufenden Pflanzenöl verantwortlich. Dieser Anteil ist allerdings nicht nur von den konstruktiven Bedingungen der Presse 1 sondern auch von dem Wassergehalt der Ölfrüchte abhängig. In jedem Fall ist es das Ziel, das ablaufende Pflanzenöl auf einen bestimmten Trubstoffanteil einzustellen.

Das Pflanzenöl läuft in einen Auffang- und Mischbehälter 2. Dort wird es durch ein nicht gezeigtes Mischpaddel in Bewegung gehalten. Gleichzeitig wird auf diese Weise verhindert, dass sich die Trubstoffe in dem Auffang- und Mischbehälter 2 absetzen. Das Pflanzenöl erhitzt sich beim Pressen und weist in dem Auffang- und Mischbehälter 2, je nach Pressgrad, eine Temperatur zwischen 35 und 42°C auf. Bei dieser Temperatur ist das Pflanzenöl dünnflüssig, und es entstehen bei dem Mischvorgang keine Schlieren, die eine gleichmäßige Verteilung der Trubstoffe verhindern würden.

Über den Dosierer 4 wird Tonmineral, beispielsweise säureaktiviertes Bentonit, zugegeben. Die Zugabe richtet sich nach dem Trubstoffanteil des aufgefangenen Pflanzenöls. Ebenso ist der Gehalt von Phosphor, Calcium und Magnesium nach der Pressung zu berücksichtigen. Es gilt, dass stark gepresstes Öl einen höheren Anteil dieser Stoffe aufweist als schonend gepresstes Öl.

Die Pumpe 8 saugt das Öl aus dem Auffang- und Mischbehälter 2 und drückt es durch den Filter 3. Der vor dem Filter 3 anstehende Druck wird durch den Drucksensor 10 ermittelt und an die Steuerung 5 weitergegeben. Das aus dem Filter 3 abfließende Öl wird durch den optischen Sensor 9 geprüft. Dieser optische Sensor 9 ermittelt z. B. über die Transparenz des Öls den Anteil an Trubstoffen.

Von dem Filter 3 gelangt das Öl in das 3-Wege-Ventil 6 und wird von dort wieder dem Auffang- und Mischbehälter 2 oder aber dem Tank 7 zugeführt. Das 3-Wege-Ventil 6 wird durch die Steuerung 5 angesteuert.

Über den Drucksensor 10 ermittelt die Steuerung 5, wie schnell der Druck vor dem Filter 3 ansteigt. Proportional zu dem Druckanstieg entwickelt sich der Aufbau des Filterkuchens in dem Filter 3. Der Druckanstieg ist daher auch ein Maßstab für den Trubstoffanteil in dem Öl in dem Auffang- und Mischbehälter 2. Entsprechend dem Druckanstieg vor dem Filter 3 wird daher der Dosierer 4 angesteuert und eine berechnete Menge an Tonmineral zugegeben.

Die Steuerung 5 prüft über den Drucksensor 10 ständig den Druck vor dem Filter 3. So lange der Drucksensor 10 einen Wert ermittelt, der unterhalb eines vorbestimmten Schwellwertes liegt, wird das 3-Wege-Ventil 6 so angesteuert, dass das Öl wieder dem Auffang- und Mischbehälter 2 zugeführt wird. Auf diese Weise wird das Öl über den Filter 3 im Kreislauf gepumpt. Dieser Kreislauf dient dem Aufbau des Filterkuchens. Der Filterkuchen erfüllt die Funktion eines hochwertigen Filters und muss deshalb eine Stärke erreichen, die eine ausreichende Filtration des Pflanzenöls gewährleistet.

Erst wenn an dem Drucksensor 10 der Schwellwert überschritten wird, wird auch die Transparenz des Öls hinter dem Filter 3 durch den optischen Sensor 9 geprüft. Auch hier ist in der Steuerung 5 ein Schwellwert hinterlegt. Ist die Transparenz des durchlaufenden Öls höher als der hinterlegte Schwellwert, schaltet die Steuerung 5 das 3-Wege-Ventil 6 um. Ab diesem Zeitpunkt wird das Öl in den Tank 7 gepumpt.

Da sich der Filterkuchen immer weiter aufbaut, steigt auch der Druck vor dem Filter 3 immer weiter an. Es ist inder Steuerung 5 daher auch ein Höchstwert hinterlegt. Wird dieser Höchstwert erreicht, muss der Filter 3 gereinigt werden. Üblicherweise wird hierzu die Pumpe 8 gestoppt und der Filter 3 mit Luft getrocknet. Durch manuelles Schütteln oder durch automatisches Vibrieren wird der getrocknete Filterkuchen gelöst und nach unten abgezogen. Danach kann der Prozess von Neuem beginnen.

Der Auffang- und Mischbehälter 2 ist üblicherweise so ausgelegt, dass das ablaufende Öl während der Reinigungszeit zwischengespeichert wird und die Presse 1 auf diese Weise auch in der Reinigungspause weiter betrieben werden kann.

Alternativ ist ein zweiter Filter parallel zu dem ersten Filter vorgesehen. Die beiden Filter werden alternierend mit Pflanzenöl beschickt, so dass die Reinigung kontinuierlich betrieben werden kann. In der Zeitspanne, in der jeweils ein Filter gereinigt und ein neuer Filterkuchen aufgebaut wird, wird die Filtrierung des Pflanzenöls durch den parallelen Filter aufrechterhalten.

Bei Versuchspressungen konnten mit dem erfindungsgemäßen Verfahren bei Rapsöl folgende Werte erzielt werden:

| **Charge** | **P** | **Ca** | **Mg** | **Tonmin.** | **P** | **Ca** | **Mg** |
|---|---|---|---|---|---|---|---|
| 1 | 6,56 ppm | 9,37 ppm | 1,5 ppm | 1% | <0,3 ppm | 1,24 ppm | <0,25 ppm |
| 2 | 6,89 ppm | 8,13 ppm | 1,6 ppm | 1% | <0,3 ppm | 1,19 ppm | <0,25 ppm |
| 3 | 6,89 ppm | 8,13 ppm | 1,6 ppm | 3% | <0,3 ppm | <0,5 ppm | <0,25 ppm |
| 4 | 46,7 ppm | 36,2 ppm | 13,8 ppm | 2% | <0,3 ppm | <0,5 ppm | <0,25 ppm |

Die Spalten 2-4 beinhalten den Phosphor- bzw. Calcium- bzw. Magnesiumgehalt im gepressten Pflanzenöl in dem Auffang- und Mischbehälter 2. Die Angabe in Spalte 5 bezieht sich auf die Zugabe von Tonmineral in Gewichtsprozent zum Pflanzenöl. Die Angaben in den Spalten 6-8 geben den Phosphor- bzw. Calcium- bzw. Magnesiumgehalt des behandelten Pflanzenöls im Tank 7 wieder. Bei einigen Angaben in den Spalten 6-8 wurden die Nachweisgrenzen des beauftragten Labors erreicht. Es ist daher nicht auszuschließen, dass die tatsächlichen Werte noch erheblich unter diesen Werten liegen.

### Bezugszeichenliste:

- 1: Presse
- 2: Auffang- und Mischbehälter
- 3: Filter
- 4: Dosierer
- 5: Steuerung
- 6: 3-Wege-Ventil
- 7: Tank
- 8: Pumpe
- 9: optischer Sensor
- 10: Drucksensor

## Patentansprüche

1. Verfahren zur Herstellung eines Kraftstoffs aus Pflanzenöl für den Betrieb von dieselmotorischen Brennkraftmaschinen, bei dem die Ölfrüchte gepresst werden und das ablaufende Öl gefiltert wird, **dadurch gekennzeichnet, dass** das ablaufende Pflanzenöl mit den enthaltenen Trubstoffen in einem ersten Schritt vor der Filterung mit einem Tonmineral versetzt und in einem zweiten Schritt gefiltert wird, wobei das zu filternde Pflanzenöl so lange im Kreislauf durch die Filter gepumpt wird, bis sich auf dem Filter aus den Trubstoffen ein Filterkuchen aufgebaut hat, in den Tonmineral eingebunden ist, und anschließend das Trubstoffe enthaltende und mit Tonmineral versetzte Pflanzend gefiltert wird.

2. Verfahren nach Anspruch 1, **dadurch gekennzeichnet, dass** das ablaufende Pflanzen-öl nach dem Versetzen mit Tonmineral und vor der Filterung eine vorbestimmte Zeit gerührt wird.

3. Verfahren nach Anspruch 2, **dadurch gekennzeichnet, dass** das ablaufende Pflanzenöl nach dem Versetzen mit Tonmineral und vor der Filterung zwischen 20 und 60 min gerührt wird.

4. Verfahren nach Anspruch 3, **dadurch gekennzeichnet, dass** das ablaufende Pflanzenöl nach dem Versetzen mit Tonmineral und vor der Filterung zwischen 30 und 50 min gerührt wird.

5. Verfahren nach Anspruch 2, **dadurch gekennzeichnet, dass** das Gemisch aus ablaufendem Pflanzenöl und Tonmineral vor der Filterung auf einer Temperatur über 20°C gehalten wird.

6. Verfahren nach Anspruch 5, **dadurch gekennzeichnet, dass** das Gemisch aus ablaufendem Pflanzenöl und Tonmineral vor der Filterung auf einer Temperatur zwischen 35 und 42°C gehalten wird.

7. Verfahren nach Anspruch 1, **dadurch gekennzeichnet, dass** das Tonmineral Bentonit enthält.

8. Verfahren nach Anspruch 7, **dadurch gekennzeichnet, dass** das Bentonit mit Säure aktiviert ist.

9. Verfahren nach Anspruch 1, **dadurch gekennzeichnet, dass** das ablaufende Pflanzen-öl mit einer Menge von 0,25-10,0 Gewichtsprozent Tonmineral versetzt wird.

10. Verfahren nach Anspruch 9, **dadurch gekennzeichnet, dass** das ablaufende Pflanzenöl mit einer Menge von 1,0-3,0 Gewichtsprozent Tonmineral versetzt wird.

11. Verfahren nach Anspruch 1, **dadurch gekennzeichnet, dass** dem ablaufenden Pflanzenöl Zellulose haltige Zusatzstoffe beigemischt werden.

12. Verfahren nach Anspruch 1, **dadurch gekennzeichnet, dass** dem ablaufenden Pflanzenöl Kieselgur haltige Zusatzstoffe beigemischt werden.

13. Verfahren nach Anspruch 1, **dadurch gekennzeichnet, dass** die Presse so eingestellt wird, dass das ablaufende Pflanzenöl einen Trubstoffanteil zwischen 2 und 30 Gewichtsprozent aufweist.

14. Verfahren nach Anspruch 13, **dadurch gekennzeichnet, dass** das ablaufende Pflanzenöl einen Trubstoffanteil zwischen 3 und 5 Gewichtsprozent aufweist.

## Claims

1. A method of producing a fuel out of vegetable oil for the operation of pressure-ignition internal combustion engines, wherein oil seeds are pressed and the draining oil is filtered, **characterized in that** the draining vegetable oil containing the turbidities has a clay mineral added to it in a first step prior to filtering, and is filtered in a second step, wherein the vegetable oil to be filtered is pumped through the filter in a circuit until a filter cake of the turbidities in which the clay mineral is bound has built up on the filter, and subsequently the vegetable oil containing turbidities and added clay mineral is filtered.

2. The method according to claim 1, **characterized in that** the draining vegetable oil is stirred for a predetermined period of time after the addition of the clay mineral and prior to filtering.

3. The method according to claim 2, **characterized in that** the draining vegetable oil is stirred for between 20 and 60 minutes after the addition of the clay mineral and prior to filtering.

4. The method according to claim 3, **characterized in that** the draining vegetable oil is stirred for between 30 and 50 minutes after the addition of the clay mineral and prior to filtering.

5. The method according to claim 2, **characterized in that** the mixture of draining vegetable oil and clay mineral is maintained at a temperature above 20°C prior to filtering.

6. The method according to claim 5, **characterized in that** the mixture of draining vegetable oil and clay mineral is maintained at a temperature of between 35 and 42°C prior to filtering.

7. The method according to claim 1, **characterized in that** the clay mineral contains bentonite.

8. The method according to claim 7, **characterized in that** the bentonite is activated by an acid.

9. The method according to claim 1, **characterized in that** the draining vegetable oil has an amount of 0.25 to 10.0 % by weight clay mineral added to it.

10. The method according to claim 9, **characterized in that** the draining vegetable oil has an amount of 1.0 to 3.0 % by weight clay mineral added to it.

11. The method according to claim 1, **characterized in that** the draining vegetable oil has cellulose containing substances admixed to it.

12. The method according to claim 1, **characterized in that** the draining vegetable oil has kieselguhr containing substances admixed to it.

13. The method according to claim 1, **characterized in that** the press is set in such a manner that the draining vegetable oil has a turbidity content of between 2 and 30 % by weight.

14. The method according to claim 13, **characterized in that** the draining vegetable oil has a turbidity content of between 3 and 5 % by weight.

## Revendications

1. Procédé de production d'un carburant à partir d'huile végétale pour le fonctionnement de moteurs à combustion interne à moteur diesel, dans lequel les oléagineux sont pressés et l'huile s'écoulant est filtrée, **caractérisé en ce que** l'huile végétale s'écoulant avec les matières en suspension contenues est, dans une première étape, mélangée avant le filtrage à un minéral argileux et, dans une deuxième étape, est filtrée, dans lequel l'huile végétale à filtrer est pompée dans le circuit jusqu'à ce qu'un gâteau de filtration se soit constitué sur le filtre à partir des matières en suspension, dans lequel est intégré le minéral argileux et ensuite l'huile végétale contenant des matières en suspension et mélangée au minéral argileux est filtrée.

2. Procédé selon la revendication 1, **caractérisé en ce que** l'huile végétale s'écoulant, après le mélange au minéral argileux et avant le filtrage, est mélangée durant un temps prédéfini.

3. Procédé selon la revendication 2, **caractérisé en ce que** l'huile végétale s'écoulant, après le mélange au minéral argileux et avant le filtrage, est mélangée entre 20 et 60 minutes.

4. Procédé selon la revendication 3, **caractérisé en ce que** l'huile végétale s'écoulant, après le mélange au minéral argileux et avant le filtrage, est mélangée entre 30 et 50 minutes.

5. Procédé selon la revendication 2, **caractérisé en ce que** le mélange d'huile végétale s'écoulant et de minéral argileux est maintenu, avant le filtrage, à une température de plus de 20°C.

6. Procédé selon la revendication 5, **caractérisé en ce que** le mélange d'huile végétale s'écoulant et de minéral argileux est maintenu, avant le filtrage, à une température entre 35 et 42° C.

7. Procédé selon la revendication 1, **caractérisé en ce que** le minéral argileux contient de la bentonite.

8. Procédé selon la revendication 7, **caractérisé en ce que** la bentonite est activée avec de l'acide.

9. Procédé selon la revendication 1, **caractérisé en ce que** l'huile végétale s'écoulant est mélangée au minéral argileux dans une proportion de 0,25 à 10,0 pour cent en poids.

10. Procédé selon la revendication 9, **caractérisé en ce que** l'huile végétale s'écoulant est mélangée au minéral argileux dans une proportion de 1,0 à 3,0 pour cent en poids.

11. Procédé selon la revendication 1, **caractérisé en ce que** des additifs contenant de la cellulose sont mélangés à l'huile végétale s'écoulant.

12. Procédé selon la revendication 1, **caractérisé en ce que** des additifs contenant de la diatomite sont additionnés à l'huile végétale s'écoulant.

13. Procédé selon la revendication 1, **caractérisé en ce que** la presse est réglée de manière telle que l'huile végétale s'écoulant présente une part de matières en suspension située entre 2 et 30 pour cent en poids.

14. Procédé selon la revendication 13, **caractérisé en ce que** l'huile végétale s'écoulant présente une part de matières en suspension située entre 3 et 5 pour cent en poids.
